# FASCICULE DE BREVET EUROPEEN

(11) **EP 0 848 815 B1**
(45) Date de publication et mention de la délivrance du brevet: **21.04.1999**
(21) Numéro de dépôt: 96929376.0
(22) Date de dépôt: 28.08.1996
(51) Int. Cl.: G01N 29/22, G01N 29/26

(54) **DISPOSITIF DE CONTROLE NON DESTRUCTIF PAR ULTRASONS D'UNE PIECE DE FORME ALLONGEE**
VORRICHTUNG ZUR ZERSTÖRUNGSFREIEN PRÜFUNG EINES LÄNGLISCHES WERKSTÜCKS MIT ULTRASCHALL
NON DESTRUCTIVE CONTROL DEVICE FOR THE ULTRASOUND CONTROLLING OF AN ELONGATE PART

(30) Priorité: 08.09.1995 FR 9510560
(43) Date de publication de la demande: 24.06.1998
(73) Titulaire: FRAMATOME, 92400 Courbevoie (FR)
(72) Inventeur: BURAT, Olivier, F-71640 Givry (FR); DEHAN,Christophe, 72000 Le Mans (FR); PIERRE, Guillaume, F-71880 Chatenoy-le-Royal (FR)
(74) Mandataire: Bouget, Lucien
(86) Numéro de dépôt international: FR9601326
(87) Numéro de publication internationale: WO9709614

(56) Documents cités:
- EP-A- 0 076 553
- EP-A- 0 493 146
- GB-A- 2 147 102
- US-A- 4 022 055
- US-A- 5 435 314

## Description

L'invention concerne un dispositif de contrôle non destructif d'une pièce de forme allongée à section transversale sensiblement constante comportant un transducteur d'ultrasons multi-éléments et un miroir.

On connaît par le FR-A-2.670.898, un dispositif de contrôle non destructif par ultrasons de pièces de forme allongée à section sensiblement constante, tels que des tubes d'échangeur de chaleur, des profilés ou des rails.

Un tel dispositif de contrôle comporte un transducteur d'ultrasons ayant une surface active dont la forme correspond à la forme de la surface de la pièce allongée à contrôler, cette surface active étant placée en vis-à-vis de la surface de la pièce allongée pendant les déplacements du transducteur suivant la direction longitudinale de la pièce à contrôler. Une pluralité d'éléments piézo-électriques sont fixés sur la surface active du transducteur dans des positions adjacentes et des moyens d'excitation électrique sont reliés aux éléments piézoélectriques et commandés de manière à synthétiser des faisceaux ultrasonores cohérents en émission et en réception et à produire un balayage circonférentiel de la surface de la pièce allongée sur laquelle on effectue le contrôle. Un groupe d'éléments piézoélectriques juxtaposés du transducteur est excité en amplitude relative et en phase relative de façon à générer un faisceau d'ultrasons cohérent, en direction de la pièce à contrôler. Les ondes ultrasonores sont renvoyées par la pièce à contrôler vers les éléments piézoélectriques. Le signal ultrasonore arrivant sur le groupe d'éléments piézoélectriques récepteur est transformé par chaque élément de ce groupe en un signal électrique indépendant. A chacun de ces signaux, est affectée une amplification relative et un déphasage relatif. Les signaux obtenus sont alors sommés puis analysés par des moyens de recueil et d'analyse qui permettent de détecter et de localiser des défauts sur la pièce de forme allongée. L'émission d'une part et la réception d'autre part peuvent être réalisées par un même groupe d'éléments piézoélectriques, par des groupes différents et adjacents avec ou sans recouvrement ou encore par des groupes d'éléments piézoélectriques différents et disjoints. De manière à obtenir une bonne sensibilité du dispositif, la surface active du transducteur présente une surface concave dirigée vers l'élément à contrôler, les éléments piézoélectriques étant disposés suivant des génératrices courbes de direction axiale de la surface active du transducteur. On réalise ainsi une focalisation des faisceaux d'ondes ultrasonores provenant des éléments piézoélectriques, dans la direction axiale de la pièce de forme allongée à contrôler.

Grâce à un tel dispositif, on peut réaliser les contrôles avec une très bonne sensibilité, permettant de déceler des défauts de petites dimensions, sur toute la surface de la pièce de forme allongée qui peut être par exemple un tube ou un profilé. En outre, le contrôle est réalisé par simple déplacement du transducteur suivant la direction longitudinale de la pièce à contrôler, sans avoir à faire tourner le transducteur autour de l'axe longitudinal de la pièce de forme allongée. Le balayage circonférentiel de la pièce est réalisé de manière entièrement électronique par une alimentation successive de groupes d'éléments piézoélectriques juxtaposés du transducteur. On peut également réaliser un balayage de l'élément de forme allongée, sur une certaine profondeur, par des moyens entièrement électroniques. En revanche, il est nécessaire de disposer les éléments piézoélectriques suivant des génératrices courbes de la surface active du transducteur pour réaliser une focalisation dans la direction longitudinale de l'élément à contrôler.

Un tel dispositif présente donc l'avantage de ne pas comporter de partie mobile en rotation et de moyen moteur pour mettre en rotation le transducteur. Cependant, dans ce dispositif connu, la surface active du transducteur portant les éléments piézoélectriques doit être adaptée à la forme de la section transversale de la pièce à contrôler. Il est donc nécessaire de concevoir et de mettre au point des transducteurs multi-éléments adaptés à chacun des produits ou objets dont on réalise le contrôle.

Il peut en résulter des coûts importants de conception, de développement et de fabrication pour réaliser des dispositifs adaptés au contrôle d'un grand nombre d'éléments de formes différentes.

On connaît également des dispositifs de contrôle par ultrasons qui comportent un transducteur et un miroir, le miroir étant utilisé pour diriger le faisceau d'ultrasons provenant du transducteur vers la surface à contrôler.

Dans le cas du contrôle de la surface de la pièce de forme allongée, le balayage circonférentiel de la surface de la pièce peut être réalisé soit en faisant tourner le transducteur, soit en faisant tourner uniquement le miroir. Dans les deux cas, il est nécessaire de prévoir des moyens mécaniques pour mettre en rotation l'une des parties du dispositif. On n'obtient pas dans ce cas les avantages concernant la précision et la rapidité d'exécution qui sont liés à l'utilisation d'un balayage électronique.

Le document US-A-4 022 055 décrit un dispositif de contrôle de la surface d'une pièce de forme allongée dans lequel les transducteurs sont fixés de manière rigide sur leur support et leurs distances aux surfaces réfléchissantes ne sont pas réglables.

En outre, les dispositifs connus de contrôle non destructif associant un transducteur d'ultrasons et un miroir ne sont pas conçus de manière à pouvoir être adaptés au contrôle de pièces de dimensions différentes, par exemple à des tubes ayant différents diamètres et différentes épaisseurs.

Le but de l'invention est donc de proposer un dispositif de contrôle non destructif par ultrasons d'une pièce de forme allongée à section transversale sensiblement constante comportant un transducteur d'ultrasons multi-élément et un miroir de renvoi des ultrasons, le transducteur comportant un support ayant au moins une surface active sur laquelle des éléments piézo-électriques sont disposés de manière juxtaposée dans au moins une direction de la surface active, ainsi que des moyens d'excitation électrique du transducteur pour l'émission d'ondes ultrasonores, reliés aux éléments piézo-électriques et commandés de manière à réaliser la synthèse d'un faisceau cohérent et un balayage électronique dans une direction au moins de la surface de la pièce de forme allongée et des moyens de recueil et d'analyse des tensions électriques provenant du transducteur, le miroir comportant une surface réfléchissant les ultrasons en vis-à-vis de la surface du transducteur orientée de manière à transmettre à des zones successives de la surface de la pièce de forme allongée, les ultrasons provenant de chacun des éléments piézo-électriques et à renvoyer les ultrasons réfléchis par la surface de la pièce de forme allongée sur les éléments piézo-électriques. Ce dispositif de contrôle pouvant être adapté de manière simple et sans frais important au contrôle de pièces de forme allongée ayant des sections transversales et des dimensions différentes qui peuvent être symétriques de révolution ou non symétriques.

Dans ce but, l'invention est caractérisée en ce que la forme de l'une au moins de la surface active du transducteur et de la surface réfléchissante du miroir permet d'adapter la direction de propagation des ultrasons à la forme de la section transversale de la pièce et le support du transducteur est relié au miroir de manière telle qu'on puisse régler la distance entre la surface active du transducteur et la surface réfléchissante du miroir dans une direction axiale commune, en fonction des dimensions de la section transversale de la pièce.

Afin de bien faire comprendre l'invention, on va maintenant décrire, à titre d'exemples, en se référant aux figures jointes en annexe, plusieurs modes de réalisation d'un dispositif suivant l'invention utilisé pour le contrôle d'un tube par l'extérieur et par l'intérieur et pour le contrôle d'éléments profilés de formes variables.

La figure 1 est une vue schématique en coupe par un plan axial, d'un dispositif suivant l'invention utilisé pour le contrôle de tubes par l'extérieur.

La figure 2 est une vue schématique en coupe par un plan axial d'un dispositif suivant l'invention utilisé pour le contrôle d'un tube par l'intérieur.

Les figures 3A, 3B, 3C, 3D et 3E sont des vues en coupe de dispositifs suivant l'invention et suivant cinq variantes de réalisation utilisés pour le contrôle de tubes par l'extérieur et comportant un transducteur ayant une surface active plane, droite.

La figure 3F est une vue en coupe axiale d'un dispositif suivant l'invention et suivant une sixième variante permettant de réaliser le contrôle d'un tube par l'extérieur avec deux faisceaux ayant des angles d'incidence différents.

Les figures 4A, 4B, 4C, 4D, 4E et 4F sont des vues en coupe de dispositifs suivant l'invention et suivant six variantes de réalisation utilisés pour le contrôle de tubes par l'extérieur et comportant un transducteur ayant une surface active de révolution à génératrices droites ou courbes.

Les figures 5A et 5B sont des vues en coupe transversale telles que la vue suivant 5-5 de la figure 3A, de deux variantes de réalisation d'un transducteur suivant l'invention.

Les figures 6A, 6B, 6C, 6D et 6E sont des vues en coupe axiale d'un dispositif suivant l'invention et suivant cinq variantes utilisé pour réaliser le contrôle d'un tube par l'intérieur et comportant un transducteur ayant une surface active plane, droite.

La figure 6F est une vue en coupe axiale d'un dispositif suivant l'invention et suivant une sixième variante de réalisation permettant de réaliser le contrôle d'un tube par l'intérieur avec deux faisceaux ayant des angles d'incidence différents.

Les figures 7A et 7B sont des vues en coupe transversale telles que la vue suivant 7-7 de la figure 6A, de deux variantes de réalisation d'un transducteur suivant l'invention.

Les figures 8A, 8B, 8C, 8D, 8E et 8F sont des vues en coupe de dispositifs suivant l'invention utilisés pour le contrôle de tubes par l'intérieur et comportant un transducteur ayant une surface active de révolution à génératrices droites ou courbes.

La figure 9 est une vue suivant 9-9 de la figure 10, du transducteur d'un dispositif suivant l'invention qui peut être utilisé pour le contrôle de rails.

La figure 10 est une vue en coupe du transducteur à miroir suivant 10 de la figure 9 du dispositif de contrôle de rails.

La figure 11 est une vue en perspective d'un dispositif suivant l'invention qui peut être utilisé pour le contrôle de tôles courbes.

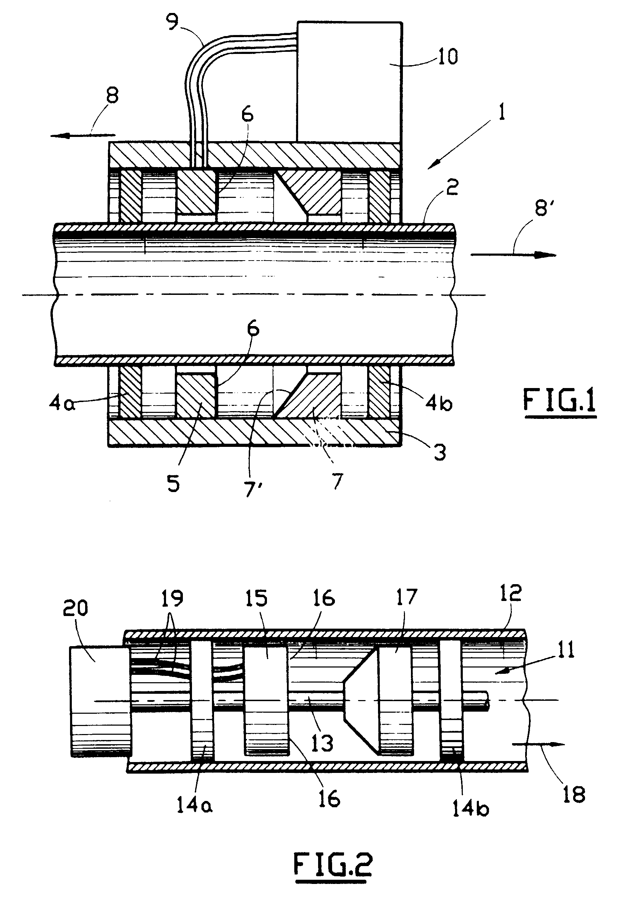

Sur la figure 1, on a représenté une sonde désignée de manière générale par le repère 1 qui peut être utilisée pour le contrôle par l'extérieur d'un tube 2 qui peut être par exemple un tube de générateur de vapeur dont le diamètre extérieur est voisin de 20 mm, ou bien une gaine de crayon combustible dont le diamètre extérieur est voisin de 10 mm.

La sonde de contrôle 1 comporte un support 3 qui peut être par exemple de forme tubulaire à l'intérieur duquel sont fixés deux éléments de guidage 4a et 4b qui peuvent avoir la forme d'anneaux dont le diamètre intérieur est légèrement supérieur au diamètre extérieur du tube 2 à contrôler ou qui sont réalisés pour être déformables de sorte que leur diamètre interne puisse s'adapter à une faible variation de diamètre externe du tube à contrôler tout en assurant un guidage sans jeu. On peut ainsi utiliser la sonde pour contrôler des tubes dont le diamètre n'est pas parfaitement constant ou des tubes présentant des diamètres légèrement différents.

A l'intérieur du corps tubulaire 3 de la sonde 1 sont également placés un support de transducteur 5 de forme annulaire sur lequel sont fixés des éléments piézo-électriques 6 et un miroir 7 de forme annulaire susceptible de renvoyer des faisceaux d'ultrasons provenant des éléments piézoélectriques 6 vers la surface extérieure du tube 2, et réciproquement du tube 2 vers les éléments 6.

Sur le corps de sonde 3 est fixé un module électronique 10 relié par un ensemble de conducteurs électriques 9 aux éléments piézoélectriques 6 du support de transducteur 5, pour assurer leur alimentation séquentielle en courant électrique et pour récupérer les courants de mesure successifs provenant des éléments piézo-électriques 6. Le module électronique 10 est relié à des moyens d'exploitation et d'affichage des mesures d'un poste de contrôle non représenté.

La sonde de contrôle 1 suivant l'invention peut être déplacée dans la direction axiale du tube ou encore le tube 2 peut être déplacé dans la direction de son axe par rapport à la sonde 1, comme indiqué par la flèche 8 ou 8', pour effectuer le contrôle du tube 2 suivant toute sa longueur, par des moyens moteurs ou de manière manuelle.

Sur la figure 2, on a représenté une sonde de contrôle 11 d'un dispositif suivant l'invention qui peut être utilisé pour effectuer le contrôle d'un tube 12 par l'intérieur.

La sonde 11 comporte un support de sonde 13 qui peut être constitué par une tige rigide ou par un câble flexible sur lequel sont engagés deux disques de guidage 14a et 14b dont le diamètre extérieur est légèrement inférieur au diamètre intérieur du tube 12. Ces éléments peuvent être déformables, afin de permettre un positionnement sans jeu de la sonde tout en tolérant une légère variation du diamètre interne d'un tube ou d'un tube à un autre.

Entre les supports 14a et 14b sont également engagés sur le support de sonde 13, un support de transducteur 15 portant des éléments piézoélectriques 16 et un miroir 17 dont la surface réfléchissante présente une forme symétrique de révolution autour de l'axe du support 13 confondu avec l'axe du tube 12 pendant les opérations de contrôle.

Les éléments piézoélectriques 16 du transducteur 15 sont reliés par un ensemble de conducteurs 19 à un module électronique 20 qui peut être fixé sur le support de sonde 13 ou disposé à l'extérieur du tube 12 à poste fixe.

Le module électronique 20 est relié ou incorporé à une unité de traitement d'un poste de contrôle comportant des moyens d'enregistrement et d'affichage des mesures fournies par le transducteur 15.

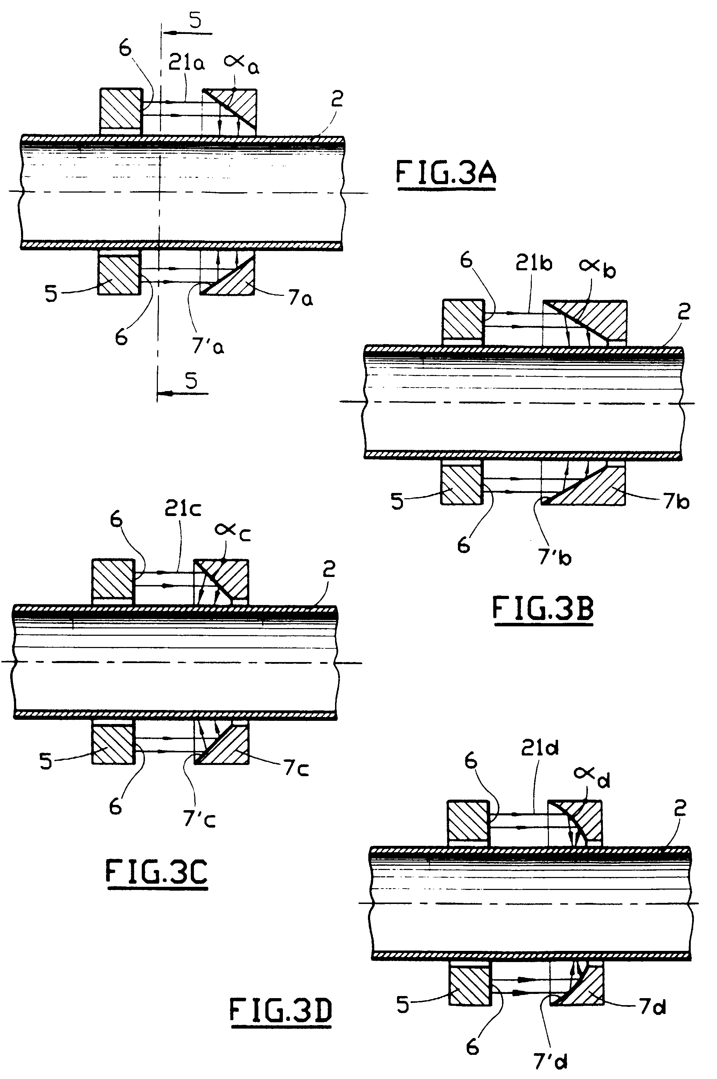

Sur la figure 3A, on voit le transducteur 5 et le miroir 7a d'une sonde de contrôle suivant l'invention qui peut être identique à la sonde de contrôle représentée sur la figure 1 et qui permet de réaliser le contrôle d'un tube 2 par l'extérieur.

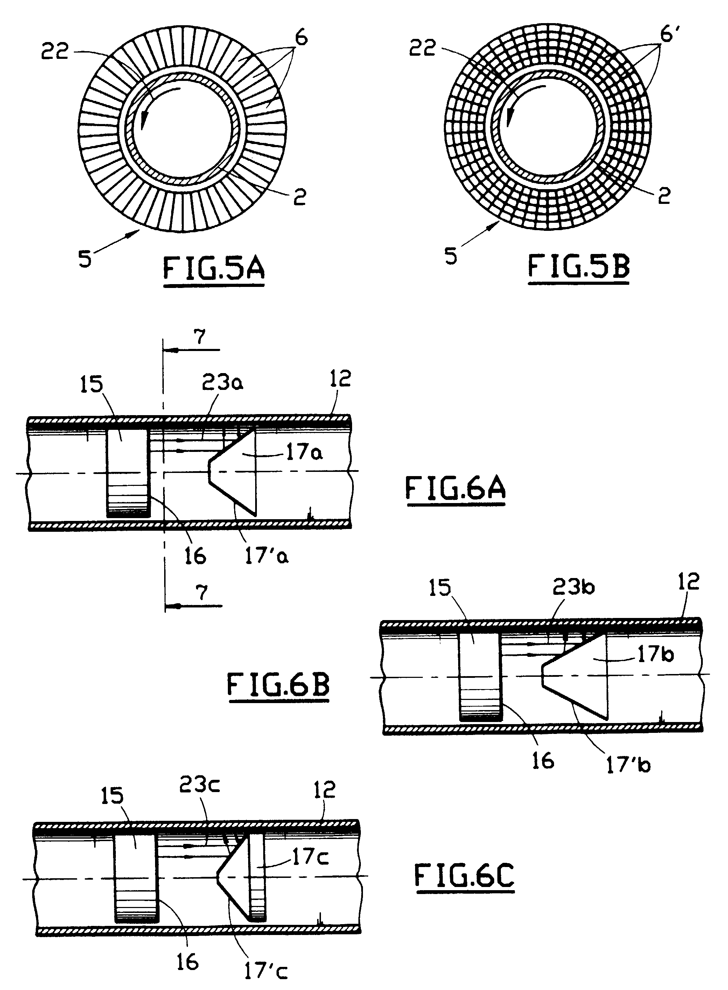

Comme il est visible sur les figures 3A et 5A, 5B, le support de transducteur 5 présente la forme d'un anneau à section sensiblement carrée qui comporte une surface plane annulaire dirigée vers la face réfléchissante 7'a du miroir 7a, sur laquelle sont fixés, dans des positions juxtaposées, les éléments piézoélectriques 6.

Les éléments piézoélectriques 6 comportent deux côtés latéraux faisant entre eux un angle sensiblement égal à 360°/n, si n est le nombre de transducteurs 6 placés en position juxtaposée dans la direction circonférentielle sur la surface annulaire du support 5, les côtés latéraux des plaquettes piézoélectriques 6 étant dirigés suivant des directions radiales du support 5.

Pour obtenir une très bonne résolution pendant le balayage du tube par des moyens électroniques, on peut utiliser plusieurs dizaines ou mêmes plusieurs centaines d'éléments piézoélectriques en position juxtaposée sur la surface du support 5 destinée à entourer complètement la surface extérieure du tube 2.

Comme représenté sur la figure 5B, il est également possible de placer des éléments piézoélectriques 6' sur la surface active du support du transducteur, dans des positions juxtaposées non seulement dans la direction circonférentielle, mais également dans des directions radiales. Cette disposition permet d'obtenir une focalisation variable et une déflexion dans deux directions perpendiculaires aux lignes de découpage (radiales et circonférentielles) des éléments piézoélectriques. On peut ainsi, en particulier, faire varier l'angle d'incidence du faisceau ultrasonore dans des plans axiaux et radiaux, par pilotage électronique.

Les éléments piézoélectriques 6 (ou 6') sont reliés à des conducteurs d'alimentation et de recueil de signaux de mesure qui traversent le support de transducteur 5.

Le miroir 7a présente une forme annulaire et une surface réfléchissante 7'a de forme tronconique dont l'axe constitue l'axe du miroir.

Le transducteur 5 et le miroir 7a sont fixés sur un même support, de manière qu'ils soient solidaires l'un de l'autre et que le miroir 7a présente un axe confondu avec l'axe du support de transducteur annulaire 5.

La surface réfléchissante 7'a est dirigée vers la surface annulaire plane du transducteur 5 portant les éléments piézoélectriques 6.

Il est possible de monter le transducteur 5 et le miroir 7a de manière à pouvoir régler la distance dans la direction axiale entre le transducteur 5 et la surface réfléchissante 7'a du miroir 7a.

On peut ainsi régler la distance parcourue par le faisceau ultrasonore entre les éléments piézoélectriques et la surface extérieure du tube 2, et ainsi pour un même matériel s'adapter à différents diamètres ou/et différentes épaisseurs de tube par un simple déplacement relatif entre le transducteur et le miroir, dans la direction axiale.

Lorsque les éléments piézoélectriques 6 sont excités électriquement, cette alimentation étant réalisée de manière séquentielle pour des groupes d'éléments piézo-électriques 6 successifs ou non suivant la direction circonférentielle du transducteur 5, comme représenté par la flèche 22 sur les figures 5A et 5B, des faisceaux d'ultrasons tels que 21a sont émis par chacun des éléments piézo-électriques successifs 6 en direction de la surface réfléchissante 7'a du miroir 7a.

Il est possible de réaliser l'excitation des éléments piézoélectriques et le déplacement relatif entre le tube et le dispositif de contrôle de manière à décrire une ou plusieurs hélices autour du tube (par exemple deux, trois ou quatre hélices).

On peut réaliser plusieurs passages successifs dans une zone du tube, par exemple pour effectuer une analyse plus fine dans une zone où un défaut a été détecté, en modifiant les conditions de balayage.

Chacun des faisceaux d'ultrasons tels que 21a est réfléchi par la surface 7'a du miroir 7a en direction de la surface extérieure du tube 2 à contrôler.

Le faisceau d'ondes ultrasonores est renvoyé sur l'élément piézoélectrique par la paroi du tube 2, après réflexion sur la surface réfléchissante 7'a.

La tension de mesure fournie par les éléments piézo-électriques est recueillie et analysée de manière à déceler la présence éventuelle d'un défaut dans la paroi du tube 2.

Par alimentation successive des groupes d'éléments piézo-électriques 6 du transducteur 5, on peut réaliser le balayage circonférentiel du tube 2 dans une zone située à l'aplomb du miroir 7a, et suivant une ou plusieurs hélices.

En déplaçant la sonde dans la direction axiale du tube, on peut réaliser un balayage de toute la surface extérieure du tube 2.

Un liquide de couplage est maintenu entre la sonde et la surface extérieure du tube 2 dans laquelle on réalise le contrôle. En faisant varier la distance entre le transducteur 5 et le miroir 7a, on peut faire varier la longueur parcourue par le faisceau ultrasonore 21a à l'intérieur du liquide de couplage.

On peut donc réaliser le contrôle d'un tube avec un balayage électronique circonférentiel en utilisant un transducteur ayant une surface active sur laquelle sont fixés les éléments piézoélectriques de forme entièrement plane, ce qui permet de simplifier considérablement la fabrication du transducteur. Ce résultat est obtenu en utilisant un miroir dont la surface réfléchissante présente la forme d'une surface symétrique de révolution, par exemple une surface conique.

Les génératrices de la surface réfléchissante 7'a du miroir 7a font un angle αₐ avec la direction axiale du transducteur qui correspond à la direction axiale du tube, pendant le contrôle.

L'angle αₐ est choisi de manière que le faisceau 21a ait une incidence normale, c'est-à-dire radiale sur la surface extérieure du tube 2. L'angle αₐ est généralement égal à 45°.

En faisant varier l'angle α des génératrices de la surface réfléchissante avec la direction axiale, on peut également obtenir un faisceau d'ondes ultrasonores incident sur la surface extérieure du tube 2 dans une direction différente d'une direction radiale du tube 2.

Sur la figure 3B, le miroir 7b comporte une surface réfléchissante 7'b dont les génératrices font un angle α_{b} avec la direction axiale du miroir et de la sonde, l'angle α_{b} étant tel que le faisceau d'ultrasons 21b est incident sur la surface extérieure du tube 2, vers l'avant par rapport à la direction normale, en supposant un déplacement axial de la sonde pendant les mesures, dans un sens tel que le miroir soit à l'avant de la sonde.

Au contraire, sur la figure 3C, le miroir 7c comporte une surface réfléchissante tronconique 7'c dont les génératrices font un angle α_{c} avec la direction axiale du transducteur tel que le faisceau 21c soit incident vers l'arrière par rapport à la direction radiale du tube.

On peut ainsi régler l'angle d'incidence de l'axe du faisceau ultrasonore sur la paroi du tube, de façon à optimiser la recherche d'un type de défaut particulier.

Dans le cas des modes de réalisation des figures 3A, 3B et 3C, le faisceau d'ondes ultrasonores est un faisceau parallèle qui ne subit pas de focalisation dans la direction axiale du tube 2, du fait de la forme de la surface du miroir.

Sur la figure 3D, on a représenté une sonde comportant un miroir 7d ayant une surface réfléchissante 7'd de forme torique concave dirigée vers la surface extérieure du tube 2.

Le faisceau d'ondes ultrasonores 21d est alors convergent entre la surface réfléchissante 7d du miroir et la surface extérieure du tube 2, de manière qu'on obtient un effet de focalisation du faisceau dans la direction axiale.

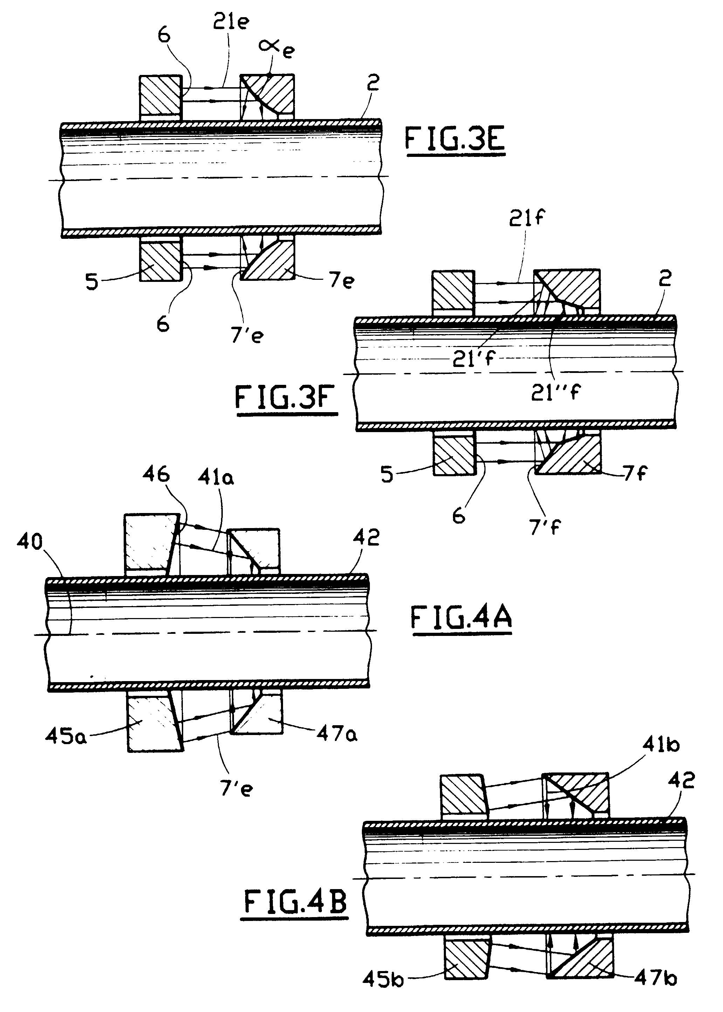

Sur la figure 3E, le miroir 7e présente une surface réfléchissante 7'e symétrique de révolution autour de l'axe de la sonde qui est convexe et dirigée vers la surface extérieure du tube 2.

Le faisceau d'ondes ultrasonores 21e est alors divergent entre la surface réfléchissante 7'e et la surface extérieure du tube 2. On obtient alors un effet d'élargissement de la tache focale ou de défocalisation du faisceau dans la paroi du tube 2.

Le dispositif suivant l'invention permet donc de régler très facilement l'angle d'incidence de l'axe du faisceau ultrasonore, dans la direction axiale et la focalisation ou la défocalisation du faisceau dans la direction axiale.

Sur la figure 3F, on a représenté un support de transducteur 5 de forme annulaire ayant une face plane sur laquelle sont fixés des éléments piézoélectriques 6.

Le miroir 7f comporte une surface réfléchissante 7'f présentant deux parties successives de forme tronconique (ou éventuellement de forme torique) dont les génératrices font des angles différents avec la direction axiale de la sonde. On obtient ainsi deux faisceaux réfléchis 21'f et 21"f à partir du faisceau incident 21f provenant du transducteur 5. Le faisceau 21'f est dirigé vers l'arrière de la sonde et le faisceau 21"f est dirigé vers l'avant. On obtient ainsi un double balayage par deux faisceaux d'ondes d'angles d'incidence différents, lors des déplacements de la sonde dans la direction axiale du tube 2, permettant par exemple la recherche simultanée de différents types de défauts.

L'ensemble des sondes représentées sur les figures 3A à 3F comporte un transducteur ultrasonore 5 identique dont la surface active sur laquelle sont fixés les éléments piézoélectriques est plane, l'adaptation du faisceau d'ondes ultrasonores en inclinaison par rapport à la surface du tube ou la focalisation ou la défocalisation du faisceau étant obtenue uniquement en changeant le miroir associé au transducteur.

Le balayage de la surface cylindrique externe du tube est réalisé à partir de la surface active plane du transducteur, par renvoi des faisceaux ultrasonores par le miroir ayant une surface symétrique de révolution, par exemple de forme conique ou torique dont la forme peut être adaptée. La réalisation d'un miroir ayant une surface symétrique de révolution, par exemple conique ou torique, est techniquement plus simple que la réalisation d'une surface active de transducteur symétrique de révolution sur laquelle sont fixés les éléments piézoélectriques.

Cependant, dans certains cas, un contrôle précis de défauts dans une pièce allongée peut nécessiter l'utilisation d'un transducteur ayant une surface active tronconique à génératrices droites ou torique. Dans ce cas, l'utilisation conjointe du transducteur et d'un miroir, dans une disposition suivant l'invention, présente également des avantages importants, par rapport à une disposition selon l'art antérieur, sans miroir. On peut en effet régler l'inclinaison et/ou la focalisation du faisceau d'ultrasons en utilisant à la fois le transducteur et le miroir, ce qui accroît les possibilités.

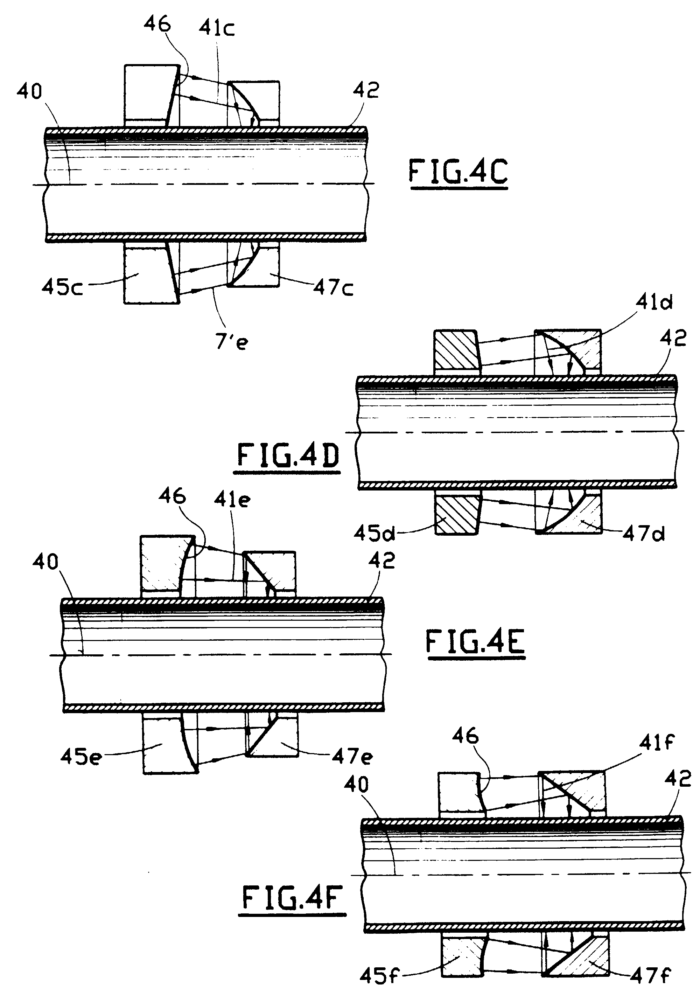

Sur les figures 4A, 4B, 4C, 4D, 4E et 4F, on a représenté des dispositifs selon l'invention comportant un transducteur dont la surface est tronconique ou torique et qui peuvent être utilisés pour effectuer le contrôle d'un tube ou d'une barre pleine par l'extérieur.

Le dispositif représenté sur la figure 4A comporte un transducteur 45a, constitué par un support de forme annulaire ayant une surface active tronconique sur laquelle sont fixés des éléments piézoélectriques 46 et un miroir annulaire 47a dont la surface réfléchissante tronconique est dirigée vers la surface active du transducteur 45a. Les génératrices droites de la surface active du transducteur et de la surface réfléchissante du miroir sont inclinées dans des sens différents par rapport à un plan transversal du dispositif perpendiculaire à l'axe commun au transducteur et au miroir de forme annulaire qui est confondu avec l'axe 40 du tube ou de la barre pleine 42, pendant le contrôle. L'angle d'inclinaison de la surface réfléchissante du miroir permet de faire parvenir le faisceau d'ultrasons 41a sur la surface extérieure du tube ou barre 42, sous une incidence sensiblement normale.

Sur la figure 4B, le transducteur 45b comporte également une surface active tronconique et le miroir 47b une surface réfléchissante tronconique. Les génératrices des deux surfaces tronconiques sont inclinées dans le même sens par rapport à un plan transversal. L'angle d'inclinaison de la surface réfléchissante du miroir est tel que le faisceau d'ultrasons 41b parvient sur la surface extérieure du tube ou barre 42 sous une incidence sensiblement normale.

Sur la figure 4C, le transducteur 45c est analogue au transducteur 45a et comporte une surface active tronconique ; le miroir 47c comporte une surface réfléchissante concave. Le faisceau d'ultrasons est réfléchi et focalisé sur la surface du tube ou barre 42 par le miroir _{47c.}

Sur la figure 4D le transducteur 45d présente une surface active tronconique et le miroir une surface réfléchissante concave. Les génératrices droites de la surface active du transducteur 45d sont inclinées dans le sens inverse des génératrices de la surface active du transducteur 45c. Le faisceau d'ultrasons 41d est réfléchi et focalisé sur la surface du tube ou barre 42 par le miroir 47d.

Sur les figures 4E et 4F, les transducteurs 45e et 45f présentent des surfaces actives toriques concaves portant les éléments piézoélectriques 46e et 46f. Les miroirs 47e et 47f sont annulaires et présentent des surfaces réfléchissantes tronconiques. La surface torique concave du transducteur 45e est dirigée vers le tube ou barre 42 et assure la focalisation du faisceau d'ultrasons qui est réfléchi vers la surface de la barre ou tube 42 par le miroir 47e dans une direction pratiquement normale. La surface torique concave du transducteur 45f est dirigée à l'opposé de la surface du tube ou barre 42 et assure la focalisation du faisceau d'ultrasons 41f qui est réfléchi dans une direction pratiquement normale par le miroir 47f. On peut donc régler la focalisation et l'inclinaison du faisceau incident d'ultrasons en utilisant un transducteur ou un miroir de forme adaptée.

De plus, comme indiqué plus haut, il est possible de régler la distance parcourue par le faisceau d'ultrasons à l'intérieur du liquide de couplage en réglant la distance entre la face active du transducteur et la surface réfléchissante du miroir. Cette possibilité peut être particulièrement intéressante dans le cas du contrôle d'éléments autour desquels on ne dispose que de peu d'espace et ne permettant pas d'établir une hauteur de liquide de couplage, par exemple une hauteur d'eau suffisante entre la surface de l'élément à contrôler et le transducteur.

Par exemple, dans le cas du contrôle des crayons de combustible ou de grappes de commande d'assemblages pour un réacteur nucléaire, l'espace entre les crayons est faible et ne permet pas de mettre en oeuvre un transducteur à ultrasons à incidence directe. Dans ce cas, le dispositif suivant l'invention comportant un miroir de renvoi des ondes ultrasonores permet de réaliser le contrôle avec une hauteur d'eau suffisante.

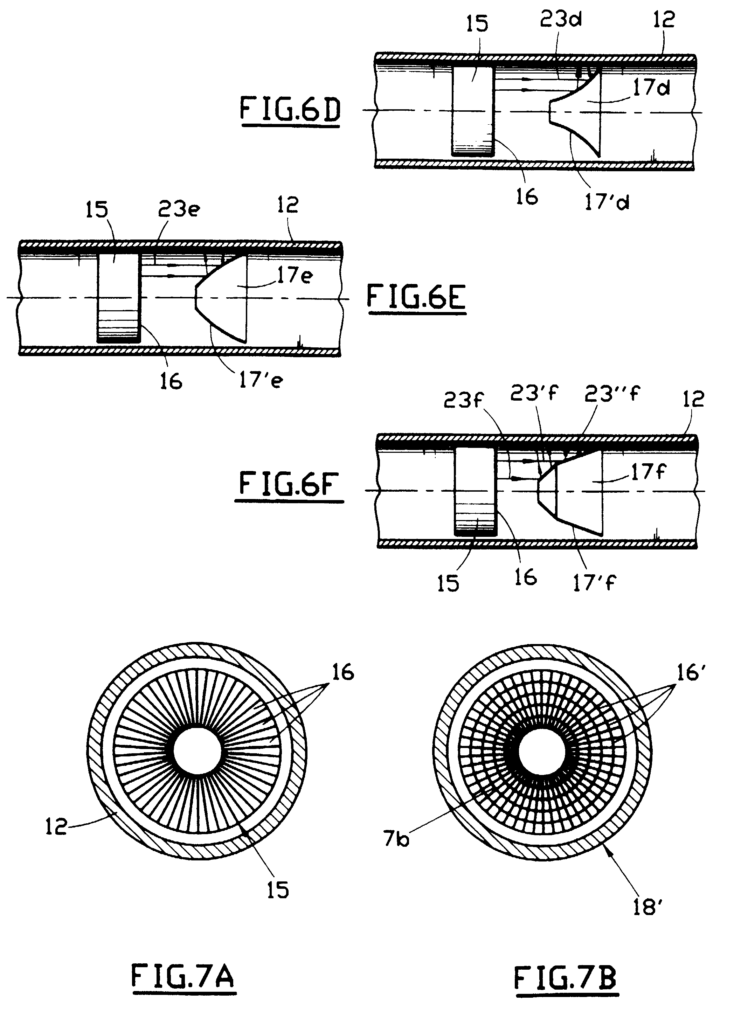

Sur les figures 6A et 7A, on a représenté une sonde de contrôle ultrasonore d'un dispositif suivant l'invention comportant un transducteur d'ultrasons 15 ayant un support de forme annulaire présentant une surface active plane sur laquelle sont fixés, dans des positions juxtaposées, des éléments piézoélectriques 16 constitués sous la forme de plaquettes en matériau piézoélectrique.

Le transducteur 15 de la sonde utilisée pour le contrôle ultrasonore d'un tube 12 ou d'un alésage par l'intérieur peut être sensiblement identique au transducteur utilisé pour le contrôle d'un tube par l'extérieur, les dimensions du support de transducteur 15 étant adaptées aux dimensions du tube et en particulier, le diamètre extérieur du support de transducteur annulaire 15 étant inférieur au diamètre intérieur du tube 12.

Comme il est visible sur la figure 7B, les éléments piézoélectriques 16' peuvent être juxtaposés non seulement dans la direction circonférentielle de la surface active du transducteur mais encore suivant des directions radiales. Ce découpage bidirectionnel (R, θ) des éléments sensibles des transducteurs permet d'obtenir une focalisation variable et une déflexion du faisceau d'ultrasons dans deux directions perpendiculaires aux lignes de découpage des éléments piézoélectriques. On peut faire varier l'angle d'incidence et régler la focalisation du faisceau ultrasonore dans des plans axiaux et radiaux par pilotage électronique, à l'émission ou à la réception.

Le transducteur ultrasonore 15 est relié à un miroir 17a par l'intermédiaire d'un support commun au transducteur et au miroir disposé dans la direction axiale de la sonde.

Le miroir 17a présente une surface réfléchissante tronconique 17'a qui est dirigée vers la surface active du support de transducteur 15 sur laquelle sont fixés les éléments piézoélectriques 16.

L'angle au sommet de la surface tronconique réfléchissante 17'a du miroir 17a est tel que le faisceau d'ondes ultrasonores 23a émis dans la direction axiale par un élément piézoélectrique 16 du transducteur soit réfléchi dans une direction radiale du tube 12, c'est-à-dire dans une direction normale à la paroi intérieure du tube.

Sur la figure 6B, on a représenté une sonde comportant un miroir 17b ayant une surface tronconique dont l'angle au sommet est tel que le faisceau d'ondes ultrasonores 23b parvenant à la surface réfléchissante 17'b du miroir 17b suivant une direction axiale soit dirigé vers l'avant de la sonde.

Au contraire, sur la figure 6C, on a représenté une sonde ultrasonore dont le miroir 17c présente une surface réfléchissante 17'c de forme tronconique dont l'angle au sommet est tel que le faisceau 23c soit réfléchi vers l'arrière de la sonde.

Sur la figure 6D, on a représenté une sonde de contrôle comportant un miroir 17d ayant une surface réfléchissante 17'd de forme torique concave dirigée vers la surface intérieure du tube 12, de manière à réaliser une focalisation du faisceau d'ondes ultrasonores 23d, dans le plan axial.

Sur la figure 6E, on a représenté une sonde de contrôle dont le miroir 17e comporte une surface réfléchissante 17'e symétrique de révolution de forme convexe dirigée vers la surface intérieure du tube 12, de manière que le faisceau d'ondes ultrasonores 23e soit divergent entre la surface réfléchissante et la surface intérieure du tube 12. On obtient dans ce cas un effet de défocalisation du faisceau, dans le plan axial.

Sur la figure 6F, on a représenté une sonde ultrasonore comportant un transducteur 15 ayant une surface active plane sur laquelle sont fixés les éléments piézo-électriques 16 et un miroir 17f dont la surface réfléchissante 17'f présente deux parties successives en forme de tronc de cône (ou éventuellement de portions de tore) ayant des angles au sommet différents. Dans ce cas, le faisceau d'ondes ultrasonores 23f incident sur la surface réfléchissante du miroir est séparé en deux faisceaux 23'f et 23"f ayant chacun un angle d'incidence particulier avec la surface intérieure du tube 12. On peut ainsi effectuer le contrôle avec un balayage simultané par deux faisceaux d'ondes ultrasonores différents permettant par exemple la recherche simultanée de deux types de défauts.

Comme dans le cas des transducteurs pour l'examen des tubes ou barres par l'extérieur, la surface active du transducteur peut être plane ou présenter une forme tronconique ou torique, dans le cas des dispositifs de contrôle des tubes par l'intérieur.

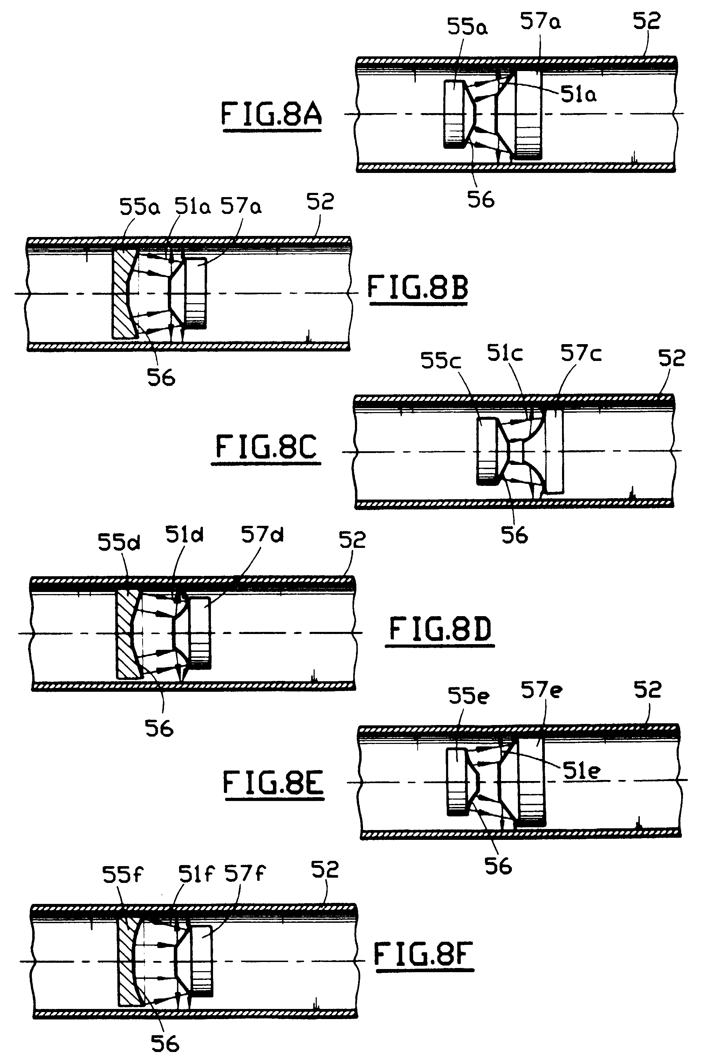

Sur la figure 8A, le transducteur 55a présente une surface active tronconique et le miroir 57a une surface réfléchissante tronconique. Les ultrasons produits par les éléments piézoélectriques 56 forment un faisceau 51a qui est réfléchi dans une direction sensiblement normale à la surface intérieure du tube 52. La surface active du transducteur 55a et la surface réfléchissante du miroir 57a sont toutes deux convexes.

Dans le cas du dispositif de contrôle représenté sur la figure 8B, la surface active du transducteur 55b est tronconique et concave alors que la surface réfléchissante du miroir 57b est tronconique et convexe.

Le dispositif de contrôle de la figure 8C comporte un transducteur 55c dont la surface active est tronconique et un miroir 57c dont la surface réfléchissante torique et concave assure la réflexion et la focalisation du faisceau ultrasonore 51c sur la surface interne du tube 52.

Sur la figure 8D, le transducteur 55d présente une surface active tronconique concave et le miroir 57d une surface réfléchissante torique concave assurant la réflexion et la focalisation du faisceau ultrasonore 51d sur la surface intérieure du tube 52.

Sur la surface 8E, le transducteur 55e présente une surface active de forme torique concave sur laquelle sont fixés des éléments piézoélectriques 56e et le miroir une surface réfléchissante tronconique. Le faisceau ultrasonore 51e est focalisé par la surface active du transducteur et réfléchi par le miroir en direction de la surface interne du tube 52.

Sur la figure 8F, le transducteur 55f présente également une surface active de forme torique, concave le miroir est également tronconique. La surface active du transducteur torique 55f est dirigée vers l'axe 50 du tube 52 alors que la surface active du transducteur 55f est dirigée vers la surface interne du tube 52.

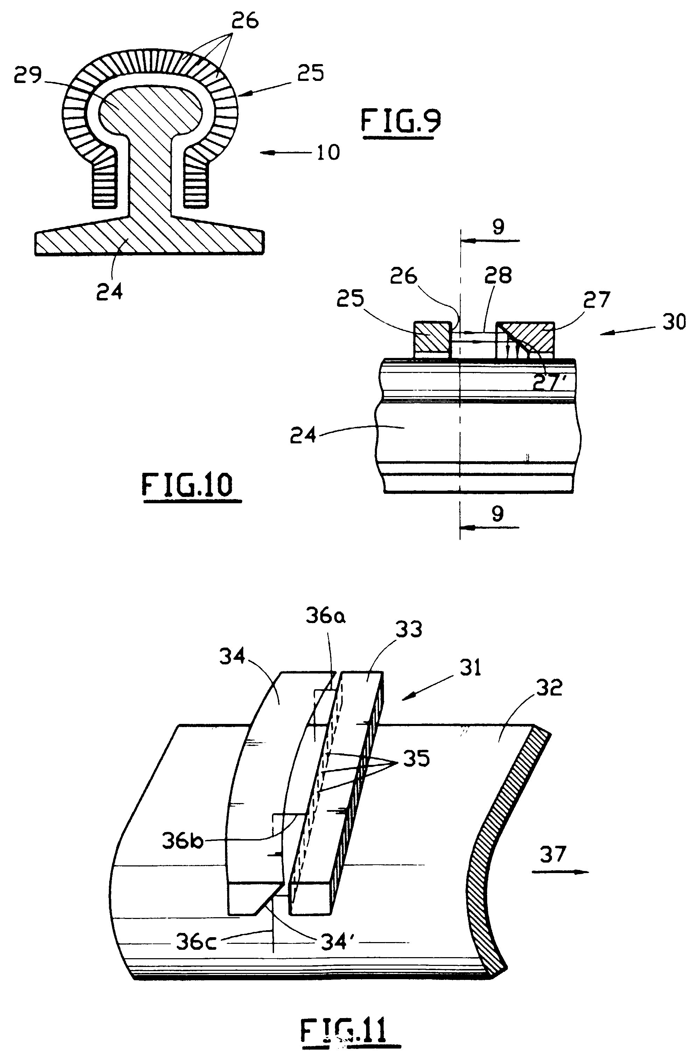

Sur les figures 9 et 10, on a représenté une sonde de contrôle 30 suivant l'invention permettant de réaliser le contrôle d'un rail 24, en particulier dans la zone du champignon 29 du rail.

La sonde de contrôle 30 comporte un transducteur ultrasonore 25 dont le support présente une section transversale visible sur la figure 9 délimitée par deux contours parallèles au contour extérieur du rail dans la zone du champignon 29. En position de contrôle, le transducteur 25 vient coiffer la partie supérieure du rail avec un certain jeu permettant de déplacer la sonde sans difficulté sur le rail.

Le support 25 du transducteur comporte une surface plane sur laquelle sont fixés, en position juxtaposée, des éléments piézoélectriques 26.

Le transducteur 25 est solidaire, par l'intermédiaire d'un support non représenté, d'un miroir 27 dont la forme en section transversale est sensiblement identique à la forme du support de transducteur 25.

Comme il est visible sur la figure 10, le miroir 27 comporte une surface réfléchissante 27' ayant des génératrices inclinées par rapport à l'axe de la sonde qui est parallèle, pendant le contrôle, à l'axe longitudinal du rail.

La surface 27' est inclinée et dirigée vers la surface du rail à contrôler, de sorte que les faisceaux d'ondes ultrasonores 28 provenant des éléments piézoélectriques 26 soient dirigés vers la surface du rail.

On peut donc réaliser le contrôle d'un élément profilé de forme complexe tel qu'un rail en utilisant un transducteur ayant une surface active entièrement plane sur laquelle sont fixés les éléments piézoélectriques.

Sur la figure 11, on a représenté une sonde de contrôle 31 permettant de réaliser le contrôle ultrasonore d'une tôle courbe 32.

La sonde 31 comporte un transducteur 33 et un miroir 34 solidaire du support du transducteur 33.

Le support du transducteur 33 présente une forme sensiblement parallélépipédique et comporte une face active plane longitudinale sur laquelle sont fixés des éléments piézoélectriques 35 en forme de barreaux ou de plaquettes qui sont juxtaposés sur la face active du transducteur 33.

Le miroir 34 comporte une surface réfléchissante 34' courbe en vis-à-vis de la surface active du transducteur 33 comportant les éléments piézoélectriques 35 dont la forme est courbe, de manière à suivre la courbure de la tôle 32 et qui est inclinée en direction de la surface supérieure de la tôle 32.

La forme de la surface réfléchissante 34' du miroir 34 est telle que le trajet des faisceaux d'ultrasons entre un élément piézoélectrique 35 quelconque du transducteur 33 et la surface de la tôle soit constant.

Sur la figure 11, on a représenté trois trajets 36a, 36b, 36c de trois faisceaux ultrasonores provenant de trois éléments piézoélectriques 35 espacés suivant la longueur du transducteur 33. Ces trois trajets ont des longueurs identiques.

Les conditions de transmission du faisceau d'ultrasons et les conditions du contrôle sont donc identiques quelle que soit la zone de la tôle contrôlée et quel que soit l'élément piézoélectrique utilisé lors du balayage de la tôle dans le sens longitudinal du transducteur 33, c'est-à-dire dans le sens transversal de la tôle.

La tôle peut être déplacée dans le sens de la flèche 37 qui correspond à la direction longitudinale de la tôle. Il serait bien sûr équivalent de déplacer le transducteur 33 et le miroir 34 dans le sens inverse de la flèche 37.

Dans tous les cas envisagés plus haut, les éléments piézoélectriques disposés sur la surface active du transducteur peuvent être juxtaposés suivant une ou deux directions de la surface active. Par exemple, les éléments piézoélectriques peuvent être décalés angulairement l'un par rapport à l'autre autour de l'axe du transducteur, placés de manière adjacente et découpés en segments successifs dans les directions radiales. Un tel découpage bidirectionnel permet d'assurer une déflexion et une focalisation des faisceaux ultrasonores, dans des plans axiaux et radiaux.

Les éléments piézoélectriques qui sont disposés de manière adjacente et qui assurent l'émission et la réception des ondes ultrasonores peuvent être utilisés de manières différentes suivant leur disposition sur le trajet aller et retour du faisceau d'ultrasons réfléchi par la surface de la pièce à contrôler.

Les mêmes éléments piézoélectriques peuvent être utilisés comme émetteurs et récepteurs ou des groupes différents d'éléments piézoélectriques adjacents peuvent être utilisés comme émetteur et comme récepteur avec ou sans recouvrement des groupes émetteur et récepteur. Les groupes émetteur et récepteur peuvent comporter des éléments communs ou être totalement disjoints.

Dans le cas où les groupes d'éléments émetteur et récepteur sont différents, on peut obtenir un contrôle plus fiable des zones proches de la surface de la pièce, par exemple en exploitant des échos de diffraction des ondes ultrasonores.

L'invention permet de réaliser le contrôle d'éléments profilés ou courbes d'une forme quelconque en utilisant un transducteur comportant une surface active plane ou courbe sur laquelle sont fixés des éléments piézoélectriques constituant des plaquettes ou barrettes.

Dans de nombreux cas, seul le miroir assurant la réflexion des faisceaux ultrasonores en direction de l'élément à contrôler doit être conçu et réalisé en fonction de la forme de la surface de l'élément sur lequel on réalise le contrôle.

Comme indiqué plus haut, la réalisation d'un miroir comportant une surface réfléchissante de forme adaptée est beaucoup plus simple que la réalisation de la surface active d'un transducteur sur laquelle sont fixés des éléments piézoélectriques.

Cependant, il est également possible d'utiliser des transducteurs comportant une surface active courbe, par exemple tronconique ou torique, en combinaison avec un miroir courbe, dont la surface active présente une forme symétrique de révolution.

Le dispositif suivant l'invention permet donc de réaliser le contrôle de pièces de forme quelconque ayant une section transversale sensiblement constante. Le dispositif suivant l'invention peut être adapté facilement et pour un coût limité à des applications très diverses.

Le transducteur du dispositif de contrôle peut être réalisé de manière simple ; les éléments piézoélectriques utilisés pour garnir la surface active du transducteur peuvent être d'une forme tout-à-fait standard, ce qui permet de recourir à des fabrications industrielles en grande série et relativement peu coûteuses.

En outre, les transducteurs des dispositifs de contrôle suivant l'invention peuvent être facilement miniaturisés du fait de leur forme simple et de la possibilité de réglage de la distance parcourue par le faisceau d'ultrasons à l'intérieur du liquide de couplage. On peut réduire le nombre d'éléments piézoélectriques utilisés par rapport aux transducteurs des dispositifs de contrôle suivant l'art antérieur, ce qui permet de simplifier les systèmes électroniques de commande et de recueil des mesures associés à ces transducteurs.

L'invention ne se limite pas aux modes de réalisation qui ont été décrits.

C'est ainsi qu'on peut concevoir des dispositifs pour réaliser le contrôle ultrasonore d'éléments profilés pleins ou creux par l'intérieur ou par l'extérieur, quelle que soit la forme de la section transversale de ces éléments profilés.

L'invention s'applique dans le domaine du contrôle d'un grand nombre de pièces ou de composants utilisés dans un réacteur nucléaire et par exemple pour le contrôle par l'extérieur d'éléments tubulaires tels que des crayons de grappes de contrôle, des tubes de générateur de vapeur ou des gaines de crayons combustibles en fin de fabrication ou encore pour le contrôle par l'intérieur d'éléments tubulaires tels que des tubes de générateur de vapeur droits, cintrés ou spiralés, de tubes-guides d'assemblages combustibles, de piquages de cuve ou de pressuriseur ou encore d'adaptateurs de traversée de couvercle de cuve ou de pénétrations de fond de cuve d'un réacteur nucléaire.

En dehors du secteur des réacteurs nucléaires, l'invention peut s'appliquer au contrôle de matériaux profilés de section quelconque, par exemple dans le cadre du contrôle de profilés en cours ou en fin de fabrication ou de rails de chemins de fer.

L'invention s'applique également au contrôle de tôles planes ou mises en forme, par exemple par cintrage.

## Revendications

1. Dispositif de contrôle non destructif par ultrasons d'une pièce (2, 12, 24, 32) de forme allongée à section transversale sensiblement constante comportant un transducteur d'ultrasons multi-élément (5, 15, 25, 33) et un miroir (7, 17, 27, 34) de renvoi des ultrasons, le transducteur comportant un support ayant au moins une surface active sur laquelle des élément piézo-électriques (6, 16, 26, 35) sont disposés de manière juxtaposée dans au moins une direction de la surface active, ainsi que des moyens d'excitation électrique (10, 20) du transducteur (5, 15, 25, 33) pour l'émission d'ondes ultrasonores, reliés aux éléments piézo-électriques (6, 16, 26, 35) et commandés de manière à réaliser la synthèse d'un faisceau cohérent et un balayage électronique dans une direction au moins de la surface de la pièce de forme allongée (2, 12, 24, 32) et des moyens de recueil et d'analyse (10, 20) des tensions électriques provenant du transducteur (5, 15, 25, 33), le miroir (7, 17, 27, 34) comportant une surface réfléchissant les ultrasons en vis-à-vis de la surface du transducteur orientée de manière à transmettre à des zones successives de la surface de la pièce de forme allongée (2, 12, 24, 32) , les ultrasons provenant de chacun des éléments piézo-électriques (6, 16, 26, 35) et à renvoyer les ultrasons réfléchis par la surface de la pièce de forme allongée (2, 12, 24, 32, 42, 52) sur les éléments piézo-électriques (6, 16, 26, 46, 56), caractérisé par le fait que la forme de l'une au moins de la surface active du transducteur (5, 15, 25, 33) et de la surface réfléchissante du miroir (7, 17, 27, 34) permet d'adapter la direction de propagation des ultrasons à la forme de la section transversale de la pièce et le support du transducteur est relié au miroir de manière telle qu'on puisse régler la distance entre la surface active du transducteur et la surface réfléchissante du miroir dans une direction axiale commune, en fonction des dimensions de la section transversale de la pièce (2, 12, 24, 32).

2. Dispositif de contrôle suivant la revendication 1, caractérisé par le fait que la surface active du support du transducteur (5, 15, 25, 35) est une surface plane.

3. Dispositif de contrôle suivant la revendication 1, caractérisé par le fait que la surface active du support du transducteur (45a, 45b, 45c, 45d, 55a, 55b, 55c, 55d, 55e, 55f) est une surface courbe symétrique de révolution.

4. Dispositif de contrôle suivant la revendication 3, caractérisé par le fait que la surface active du transducteur (45a, 45b, 45c, 45d, 55a, 55b, 55c, 55d) est une surface de forme tronconique à génératrices droites.

5. Dispositif de contrôle suivant la revendication 3, caractérisé par le fait que la surface active du transducteur (45e, 45f, 55e, 55f) est une surface de forme torique.

6. Dispositif de contrôle suivant l'une quelconque des revendications 1 à 5, caractérisé par le fait que la surface réfléchissante du miroir (7a, 7b, 7c, 7d, 47a, ..., 47f, 57a, ..., 57f) et la surface active du transducteur (5, 15, 25, 45a, ..., 45f, 55a, ..., 55f) sont symétriques de révolution.

7. Dispositif suivant la revendication 6, caractérisé par le fait que la surface réfléchissante du miroir (7a, 7b, 7c, 7d, 47a, 47b, 47e, 47f, 57a, 57b, 57e, 57f) a une forme tronconique.

8. Dispositif suivant la revendication 6, caractérisé par le fait que la surface réfléchissante du miroir (7d, 7e, 17d, 17e, 47c, 47d, 57c, 57d) a une forme torique concave ou convexe.

9. Dispositif suivant la revendication 1, caractérisé par le fait que la surface réfléchissante du miroir (7f, 17f) comporte au moins deux parties successives différentes dans une direction axiale, de manière à réfléchir un faisceau d'ultrasons sous la forme de deux faisceaux (21'f ; 21"f ; 23'f ; 23"f) ayant des directions différentes.

10. Dispositif suivant l'une quelconque des revendications 1 à 9, caractérisé par le fait que le support du transducteur et le miroir présentent une forme annulaire.

11. Dispositif suivant la revendication 1, caractérisé par le fait que le miroir (34) comporte une surface réfléchissante (34') déterminée en fonction de la forme d'une surface de l'élément (32) à contrôler, de manière que le trajet d'un faisceau ultrasonore entre un élément piézoélectrique (35) quelconque du transducteur (33) et la surface de l'élément (32) à contrôler ait une longueur constante.

12. Dispositif suivant l'une quelconque des revendications 1 à 11, caractérisé par le fait que les éléments piézoélectriques (6, 16, 26, 35, 6', 16', 46, 56) sont disposés de manière juxtaposée dans deux directions de la surface active du transducteur.

13. Dispositif suivant la revendication 12 dans le cas où la surface active du transducteur présente une forme symétrique de révolution, caractérisé par le fait que les éléments piézoélectriques (6', 16') sont juxtaposés dans une direction circonférentielle et dans des directions radiales de la surface active du transducteur.

14. Dispositif suivant l'une quelconque des revendications 1 à 13, caractérisé par le fait que les ultrasons provenant d'un groupe d'éléments piézoélectriques et réfléchis par la surface de la pièce de forme allongée sont renvoyés sur le groupe d'éléments piézoélectriques constituant à la fois des émetteurs et récepteurs d'ultrasons.

15. Dispositif suivant l'une quelconque des revendications 1 à 13, caractérisé par le fait que les ultrasons provenant d'un premier groupe d'éléments piézo-électriques adjacents sur la surface active du transducteur et réfléchis par la surface de la pièce de forme allongée sont renvoyés sur un second groupe d'éléments piézoélectriques adjacents disposés sur la surface active du transducteur différent du premier groupe d'éléments piézoélectriques.

16. Dispositif suivant la revendication 15, caractérisé par le fait que le premier et le second groupe d'éléments piézoélectriques comportent des éléments piézo-électriques communs.

17. Dispositif suivant la revendication 15, caractérisé par le fait que le premier groupe et le second groupe d'éléments piézoélectriques adjacents ne comportent pas d'éléments piézoélectriques communs.

18. Utilisation d'un dispositif de contrôle suivant l'une quelconque des revendications 1 à 17 pour le contrôle d'un tube (2, 42) par l'extérieur du tube.

19. Utilisation d'un dispositif de contrôle suivant l'une quelconque des revendications 1 à 17 pour le contrôle d'un tube (12, 52) par l'intérieur du tube.

20. Utilisation d'un dispositif de contrôle suivant l'une quelconque des revendications 1 à 17 pour le contrôle d'un profilé.

21. Utilisation suivant la revendication 20, caractérisée par le fait que le profilé est un rail (24).

22. Utilisation d'un dispositif de contrôle suivant l'une quelconque des revendications 1 à 17 pour le contrôle d'une tôle (32).

23. Utilisation suivant la revendication 22, caractérisée par le fait que la tôle (32) est une tôle cintrée.

24. Utilisation suivant l'une quelconque des revendications 18 et 19, caractérisée par le fait qu'on réalise un déplacement relatif entre le dispositif de contrôle et le tube (2, 42, 12, 52) dans la direction de l'axe du tube et qu'on commande les moyens d'excitation électrique du transducteur du dispositif de contrôle, de manière à réaliser un balayage du tube (2, 42, 12, 52) suivant une ou plusieurs hélices ayant pour axe l'axe du tube.

## Patentansprüche

1. Vorrichtung zur zerstörungsfreien Prüfung eines Bauteils (2, 12, 24, 32) länglicher Form mit im wesentlichen konstantem Querschnitt mittels Ultraschall, mit einem Multielement-Ultraschallwandler (5, 15, 25, 33) und einem Spiegel (7, 17, 27, 34) zum Reflektieren der Ultraschallwellen, wobei der Wandler einen Träger aufweist, der mindestens eine aktive Oberfläche besitzt, auf der piezoelektrische Elemente (6, 16, 26, 35) nebeneinander entlang mindestens einer Richtung der aktiven Oberfläche angeordnet sind, mit Mitteln (10, 20) zur elektrischen Anregung des Wandlers (5, 15, 25, 33) zur Aussendung von Ultraschallwellen, die mit den piezoelektrischen Elementen (6, 16, 26, 35) verbunden sind und so gesteuert werden, daß sie die Synthese eines kohärenten Strahls und eine elektronische Schwenkung in mindestens einer Richtung der Oberfläche des länglichen Bauteils (2, 12, 24, 32) durchführen, und mit Mitteln (10, 20) zur Erfassung und zur Analyse der vom Wandler (5, 15, 25, 33) kommenden elektrischen Spannungen, wobei der Spiegel (7, 17, 27, 34) eine Oberfläche besitzt, die die Ultraschallwellen gegenüber der Oberfläche des Wandlers reflektiert und die so ausgerichtet ist, daß sie die von jedem der piezoelektrischen Elemente (6, 16, 26, 35) kommenden Ultraschallwellen auf aufeinanderfolgende Zonen der Oberfläche des länglichen Bauteils (2, 12, 24, 32) überträgt und die von der Oberfläche des länglichen Bauteils (2, 12, 24, 32, 42, 52) reflektierten Ultraschallwellen auf die piezoelektrischen Elemente (6, 16, 26, 46, 56) reflektiert, dadurch gekennzeichnet, daß die Form mindestens einer der Flächen, nämlich der aktiven Oberfläche des Wandlers (5, 15, 25, 33) oder der reflektierenden Oberfläche des Spiegels (7, 17, 27, 34), es ermöglicht, die Ausbreitungsrichtung der Ultraschallwellen an die Querschnittsform des Bauteils anzupassen, und daß der Träger des Wandlers so mit dem Spiegel verbunden ist, daß man den Abstand zwischen der aktiven Oberfläche des Wandlers und der reflektierenden Oberfläche des Spiegels in einer gemeinsamen axialen Richtung in Abhängigkeit von den Abmessungen des Querschnitts des Bauteils (2, 12, 24, 32) einstellen kann.

2. Prüfvorrichtung nach Anspruch 1, dadurch gekennzeichnet, daß die aktive Oberfläche des Trägers des Wandlers (5, 15, 25, 35) eine ebene Oberfläche ist.

3. Prüfvorrichtung nach Anspruch 1, dadurch gekennzeichnet, daß die aktive Oberfläche des Trägers des Wandlers (45a, 45b, 45c, 45d, 55a, 55b, 55c, 55d, 55e, 55f) eine drehsymmetrische, gekrümmte Oberfläche ist.

4. Prüfvorrichtung nach Anspruch 3, dadurch gekennzeichnet, daß die aktive Oberfläche des Wandlers (45a, 45b, 45c, 45d, 55a, 55b, 55c, 55d) eine kegelstumpfförmige Oberfläche mit geraden Mantellinien ist.

5. Prüfvorrichtung nach Anspruch 3, dadurch gekennzeichnet, daß die aktive Oberfläche des Wandlers (45e, 45f, 55e, 55f) eine torusförmige Oberfläche ist.

6. Prüfvorrichtung nach einem beliebigen der Ansprüche 1 bis 5, dadurch gekennzeichnet, daß die reflektierende Oberfläche des Spiegels (7a, 7b, 7c, 7d, 47a, ..., 47f, 57a, ..., 57f) und die aktive Oberfläche des Wandlers (5, 15, 25, 45a, ..., 45f, 55a, ..., 55f) drehsymmetrisch sind.

7. Vorrichtung nach Anspruch 6, dadurch gekennzeichnet, daß die reflektierende Oberfläche des Spiegels (7a, 7b, 7c, 7d, 47a, 47b, 47e, 47f, 57a, 57b, 57e, 57f) eine Kegelstumpfform hat.

8. Vorrichtung nach Anspruch 6, dadurch gekennzeichnet, daß die reflektierende Oberfläche des Spiegels (7d, 7e, 17d, 17e, 47c, 47d, 57c, 57d) eine konkave oder konvexe Torusform hat.

9. Vorrichtung nach Anspruch 1, dadurch gekennzeichnet, daß die reflektierende Oberfläche des Spiegels (7f, 17f) mindestens zwei aufeinanderfolgende Bereiche aufweist, die in einer axialen Richtung unterschiedlich sind, so daß sie einen Ultraschallstrahl in Form von zwei Strahlen (21'f; 21"f; 23'f; 23"f) unterschiedlicher Richtungen reflektieren.

10. Vorrichtung nach einem beliebigen der Ansprüche 1 bis 9, dadurch gekennzeichnet, daß der Träger des Wandlers und der Spiegel ringförmig sind.

11. Vorrichtung nach Anspruch 1, dadurch gekennzeichnet, daß der Spiegel (34) eine reflektierende Oberfläche (34') aufweist, die in Abhängigkeit von der Form einer Oberfläche des zu prüfenden Elements (32) bestimmt wird, so daß die Strecke eines Ultraschallstrahls zwischen einem beliebigen piezoelektrischen Element (35) des Wandlers (33) und der Oberfläche des zu prüfenden Elements (32) eine konstante Länge besitzt.

12. Vorrichtung nach einem beliebigen der Ansprüche 1 bis 11, dadurch gekennzeichnet, daß die piezoelektrischen Elemente (6, 16, 26, 35, 6', 16', 45, 56) nebeneinander in zwei Richtungen der aktiven Oberfläche des Wandlers angeordnet sind.

13. Vorrichtung nach Anspruch 12 für den Fall, daß die aktive Oberfläche des Wandlers eine drehsymmetrische Form aufweist, dadurch gekennzeichnet, daß die piezoelektrischen Elemente (6', 16') in einer Umfangsrichtung und in radialen Richtungen der aktiven Oberfläche des Wandlers nebeneinander angeordnet sind.

14. Vorrichtung nach einem beliebigen der Ansprüche 1 bis 13, dadurch gekennzeichnet, daß die Ultraschallwellen, die von einer Gruppe von piezoelektrischen Elementen kommen und von der Oberfläche des länglichen Bauteils reflektiert werden, auf die Gruppe von piezoelektrischen Elementen reflektiert werden, die sowohl Ultraschallsender als auch Ultraschallempfänger bilden.

15. Vorrichtung nach einem beliebigen der Ansprüche 1 bis 13, dadurch gekennzeichnet, daß die von einer ersten Gruppe von benachbarten piezoelektrischen Elementen auf der aktiven Oberfläche des Wandlers kommenden und von der Oberfläche des länglichen Bauteils reflektierten Ultraschallwellen auf eine zweite Gruppe von auf der aktiven Oberfläche des Wandlers angeordneten, benachbarten piezoelektrischen Elementen reflektiert werden, die sich von der ersten Gruppe von piezoelektrischen Elementen unterscheidet.

16. Vorrichtung nach Anspruch 15, dadurch gekennzeichnet, daß die erste und die zweite Gruppe von piezoelektrischen Elementen gemeinsame piezoelektrische Elemente aufweisen.

17. Vorrichtung nach Anspruch 15, dadurch gekennzeichnet, daß die erste und die zweite Gruppe von benachbarten piezoelektrischen Elementen keine gemeinsamen piezoelektrischen Elemente aufweisen.

18. Verwendung einer Prüfvorrichtung nach einem beliebigen der Ansprüche 1 bis 17 zur Prüfung eines Rohrs (2, 42) von außerhalb des Rohrs.

19. Verwendung einer Prüfvorrichtung nach einem beliebigen der Ansprüche 1 bis 17 zur Prüfung eines Rohrs (12, 52) von innerhalb des Rohrs.

20. Verwendung einer Prüfvorrichtung nach einem beliebigen der Ansprüche 1 bis 17 zur Prüfung eines Profilstücks.

21. Verwendung nach Anspruch 20, dadurch gekennzeichnet, daß das Profilstück eine Schiene (24) ist.

22. Verwendung einer Prüfvorrichtung nach einem beliebigen der Ansprüche 1 bis 17 zur Prüfung eines Blechs (32).

23. Verwendung nach Anspruch 22, dadurch gekennzeichnet, daß das Blech (32) ein gebogenes Blech ist.

24. Verwendung nach einem beliebigen der Ansprüche 18 und 19, dadurch gekennzeichnet, daß man eine relative Verschiebung zwischen der Prüfvorrichtung und dem Rohr (2, 42, 12, 52) in Richtung der Achse des Rohrs durchführt und daß man die Mittel zur elektrischen Anregung des Wandlers der Prüfvorrichtung so steuert, daß eine Abtastung des Rohrs (2, 42, 12, 52) gemäß einer oder mehreren Schraubenlinien durchgeführt wird, deren Achse die Achse des Rohrs ist.

## Claims

1. Non-destructive control device for controlling by ultrasound an elongate part (2, 12, 24, 32) with a more or less constant cross-section, comprieing a multi-element ultrasound transducer (5, 15, 25, 33) and a mirror (7, 17, 27, 34) for returning the ultrasound, the transducer comprising a support having at least one active surface on which piezoelectric elements (6, 16, 26, 35) are disposed in a juxtaposed manner in at least one direction of the active surface, as well as means for the electrical excitation (10, 20) of the transducer (5, 15, 25, 33) for the emission of ultrasound waves, connected to the piezoelectric elements (6, 16, 26, 35) and controlled in such a way as to bring about the synthesis of a coherent beam and electronic scanning in one direction at least of the surface of the elongate part (2, 12, 24, 32) and means for collecting and analysing the electric voltages coming from the transducer (5, 15, 25, 33), the mirror (7, 17, 27, 34) comprising a surface reflecting the ultrasound opposite the surface of the transducer oriented so as to transmit to successive zones of the surface of the elongate part (2, 12, 24, 32), the ultrasound coming from each of the piezoelectric elements (6, 16, 26, 35), and to return the ultrasound reflected by the surface of the elongate part (2, 12, 24, 32, 42, 52) on the piezoelectric elements (6, 16, 26, 46, 56), **characterised by the fact that** the shape of one at least of the active surface of the transducer (5, 15, 25, 33) and of the reflective surface of the mirror (7, 17, 27, 34) makes it possible to adapt the propagation direction of the ultrasound to the shape of the cross-section of the part and the transducer support is connected to the mirror in such a way that it is possible to adjust the distance between the active surface of the transducer and the reflective surface of the mirror in a common axial direction, according to the dimensions of the cross-section of the part (2, 12, 24, 32).

2. Control device according to claim 1, **characterised by the fact that** the active surface of the transducer support (5, 15, 25, 35) is a flat surface.

3. Control device according to claim 1, **characterised by the fact that** the active surface of the transducer support (45a, 45b, 45c, 45d, 55a, 55b, 55c, 55d, 55e, 55f) is a surface curved in rotational symmetry.

4. Control device according to claim 3, **characterised by the fact that** the active surface of the transducer (45a, 45b, 45c, 45d, 55a, 55b, 55c, 55d) is a surface shaped like a flattened cone with straight generators.

5. Control device according to claim 1, **characterised by the fact that** the active surface of the transducer (45e, 45f, 55e, 55f) is a surface in the shape of a torus.

6. Control device according to any one of claims 1 to 5, **characterised by the fact that** the reflective surface of the mirror (7a, 7b, 7c, 7d, 47a, ..., 47f, 57a, ..., 57f) and the active surface of the transducer (5, 15, 25, 45a, ..., 45f, 55a, ..., 55f) are rotationally symmetric.

7. Device according to claim 6, **characterised by the fact that** the reflective surface of the mirror (7a, 7b, 7c, 7d, 47a, 47b, 47e, 47f, 57a, 57b, 57e, 57f) is shaped like a flattened cone.

8. Device according to claim 6, **characterised by the fact that** the reflective surface of the mirror (7d, 7e, 17d, 17e, 47c, 47d, 57c, 57d) has a concave or convex toric shape.

9. Device according to claim 1, **characterised by the fact that** the reflective surface of the mirror (7f, 17f) comprises at least two different successive portions in an axial direction, in such a way as to reflect an ultrasonic beam in the form of two beams (21'f; 21"f; 23'f; 23"f) having different directions.

10. Device according to any one of claims 1 to 9, **characterised by the fact that** the transducer support and the mirror present an annular shape.

11. Device according to claim 1, **characterised by the fact that** the mirror (34) comprises a reflective surface (34') determined according to the shape of one surface of the element (32) to be controlled, in such a way that the path of an ultrasonic beam between any piozoelectric element (35) of the transducer (33) and the surface of the element (32) to be controlled is of a constant length.

12. Device according to any one of claims 1 to 11, **characterised by the fact that** the piezoelectric elements (6, 16, 26, 35, 6', 16', 46, 56) are disposed in a juxtaposed manner in two directions of the active surface of the transducer.

13. Device according to claim 12 in the case where the active surface of the transducer is rotationally symmetrical in shape, **characterised by the fact that** the piezoelectric elements (6', 16') are juxtaposed in a circumferential direction and in radial directions of the active surface of the transducer.

14. Device according to any one of claims 1 to 13, **characterised by the fact that** the ultrasound coming from a group of piezoelectric elements and reflected by the surface of the elongate part are returned on the group of piezoelectric elements constituting at the same time transmitters and receivers of ultrasound.

15. Device according to any one of claims 1 to 13, **characterised by the fact that** the ultrasound coming from a first group of adjacent piezoelectric elements on the active surface of the transducer and reflected by the surface of the elongate part are returned on a second group of adjacent piezoelectric elements disposed on the active surface of the transducer, this group being different from the first group of piezoelectric elements.

16. Device according to claim 15, **characterised by the fact that** the first group and the second group of piezoelectric elements comprise common piezoelectric elements.

17. Device according to claim 15, **characterised by the fact that** the first group and the second group of adjacent piezoelectric elements do not comprise any common piezoelectric elements.

18. Use of a control device according to any one of claims 1 to 17 for controlling a tube (2, 42) from the exterior of the tube.

19. Use of a control device according to any one of claims 1 to 17 for controlling a tube (12, 52) from the interior of the tube.

20. Use of a control device according to any one of claims 1 to 17 for controlling a section.

21. Use according to claim 20, **characterised by the fact that** the section is a rail (24).

22. Use of a control device according to any one of claims 1 to 17 for controlling a plate (32).

23. Use according to claim 22, **characterised by the fact that** the plate (32) is curved.

24. Use according to any one of claims 18 and 19, characterised by the fact that relative displacement is effected between the control device and the tube (2, 42, 12, 52) in the direction of the axis of the tube and that the means for the electrical excitation of the transducer of the control device are controlled in such a way as to carry out scanning of the tube (2, 42, 12, 52) following one or more helixes which have the axis of the tube as their axis.
